# EUROPÄISCHE PATENTSCHRIFT

(11) **EP 3 006 381 B1**
(45) Veröffentlichungstag und Bekanntmachung des Hinweises auf die Patenterteilung: **18.07.2018**
(21) Anmeldenummer: 15186930.2
(22) Anmeldetag: 25.09.2015
(51) Int. Cl.: B65G 23/26, B65G 23/44

(54) **FÖRDEREINRICHTUNG MIT BREMSVORRICHTUNG**
CONVEYING DEVICE WITH BRAKING DEVICE
DISPOSITIF DE TRANSPORT COMPRENANT UN DISPOSITIF DE FREINAGE

(30) Priorität: 30.09.2014 CH 14852014
(43) Veröffentlichungstag der Anmeldung: 13.04.2016
(73) Patentinhaber: WRH Walter Reist Holding AG, 8272 Ermatingen (CH)
(72) Erfinder: ALIESCH, Robert, 8841 Gross (CH)
(74) Vertreter: Frei Patent Attorneys

(56) Entgegenhaltungen:
- EP-A2- 0 088 042
- WO-A1-2013/016833
- WO-A1-2013/103352
- WO-A1-2014/066578
- WO-A2-2007/124749
- JP-A- H05 294 429
- JP-A- H10 167 441
- JP-U- H03 125 722
- JP-U- S51 117 035
- JP-U- S63 130 414
- US-B1- 6 367 619

## Beschreibung

Die Erfindung bezieht sich auf das Gebiet von Fördereinrichtungen mit einer Bremsvorrichtung. Eine solche Fördereinrichtung umfasst ein umlaufend geführtes, flächig ausgedehntes Förderorgan, welches einen Förderabschnitt mit einer Förderfläche und einen Rückführabschnitt ausbildet. Sie umfasst weiter einen vorderen Kopfendbereich, in welchem das Förderorgan vom Förderabschnitt in Bewegungsrichtung des Förderorgans in den Rückführabschnitt umgelenkt wird, sowie eine Bremsvorrichtung, welche zum Ausüben einer Bremswirkung auf das angetriebene Förderorgan ausgestaltet ist. Die Erfindung bezieht sich auf eine Fördereinrichtung gemäss dem Oberbegriff des Patentanspruches 1.

Die Bremsvorrichtungen werden in den Fördereinrichtungen dazu verwendet, das Förderorgan zu bremsen und insbesondere durch das bremsen kontrolliert zu bewegen. Häufig werden Bremsvorrichtungen im Zusammenspiel mit einem Antrieb verwendet, was einen hohen Grad an Kontrolle der Bewegungen des Förderorgans erlaubt. Bremsvorrichtungen können unter Anderem dazu verwendet werden, das Förderorgan oder mindestens einen in Bewegungsrichtung des Förderorgans stromabwärts der Bremse befindlichen Abschnitt des Förderorgans gezielt unter Zugspannung zu setzen. Durch Zugspannung auf mindestens dem Abschnitt des Förderorgans kann an den entsprechenden Stellen das Förderorgan und insbesondere die Förderoberfläche straff und/oder in der gewünschten Form (z.B. eben) gehalten werden.

Fördereinrichtungen mit einem umlaufenden, flächig ausgedehnten Förderorgan wie Förderband oder Mattenkette sind im Stand der Technik bekannt. Die Förderorgane werden in der Regel an einer oder zwei Umlenkstellen über eine Umlenkwelle angetrieben. Bekannte Fördereinrichtung weisen ortsfeste Bremsvorrichtungen mit einem mit dem Förderorgan mitbewegten Bremselement auf. Die Bewegung des Förderorgans wird dabei auf das Bremselement übertragen und in der Bremsvorrichtung abgeschwächt, also gebremst. Dabei kann das Bremselement als in das Förderorgan eingreifendes Element wie etwa ein Zahnrad oder als nicht eingreifendes Element wie eine Rolle ausgebildet sein.

In einer bekannten Ausführungsform wird das Förderorgan zwischen einer ersten gebremsten Umlenkwelle (also einem mitbewegten, um eine ortsfeste Achse rotierenden Bremselement) und einer zweiten ungebremsten Umlenkwelle gespannt und umgelenkt. Dabei kann die erste gebremste Umlenkwelle in einer einfachen Ausführungsweise lediglich durch einen Widerstand von deren Drehlagerung gebremst sein. Durch das Spannen zwischen der ersten und der zweiten Umlenkwelle kann sich die Bremswirkung der ersten gebremsten Umlenkwelle erhöhen.

Die genannten Fördereinrichtungen finden insbesondere als Werker-Mitfahrbänder Verwendung. Werker-Mitfahrbänder sind dazu ausgelegt, entlang einer Fertigungsstrasse bzw. am Fliessband arbeitende Personen zu tragen und wenigstens zeitweise oder andauernd in Fertigungsrichtung zu fördern, so dass die in der Fertigungsstrasse bzw. am Fliessband arbeitenden Personen mit den durch die Fertigungsstrasse bzw. auf dem Fliessband geförderten Fertigungsgüter mitbewegt werden. Werker-Mitfahrbänder zeichnen sich insbesondere durch eine geringe Bauhöhe aus.

So beschreibt die DE 10 2006 010 974 ein Werker-Mitfahrband mit einem Förderband sowie einem im Wesentlichen horizontalen Führungsrahmen mit zwei seitlichen, sich horizontal in Längsrichtung des Förderbandes erstreckenden Seitenwangen. An den Enden des Werker-Mitfahrbandes ist jeweils eine durch einen Antrieb antreibbare Umlenkrolle drehbar gelagert. Der Antrieb ist zwischen den beiden Seitenwangen angeordnet. Das Förderband ist zwischen den beiden Umlenkrollen mit einstellbaren Spannvorrichtungen gespannt.

In JP S51 117035 U ist eine Mattenkette offenbart, welche in einem Stirnbereich durch ein Kettenrad umgelenkt und in die Mattenkette eingreifend angetrieben wird. In einem anderen Stirnbereich wird die Mattenkette durch eine gekrümmte Fläche umgelenkt, auf welcher die Mattenkette gleitet.

JP S51 117035 U offenbart eine Fördereinrichtung nach dem Oberbegriff des Anspruchs 1. Die bekannten Bremsvorrichtungen mit mitbewegten Bremselementen weisen den Nachteil auf, dass deren Konstruktion aufwendig ist. Somit sind diese Bremsvorrichtungen teuer und kompliziert in der Herstellung. Durch eine hohe Anzahl von Einzelteilen ist auch eine hohe Ausfallwahrscheinlichkeit gegeben. Wartung und Unterhalt solcher Fördereinrichtungen sind dementsprechend aufwendig und zeit- sowie kostenintensiv.

In der Variante mit dem gespannten Förderorgan weist die Fördereinrichtung den Nachteil auf, dass das Förderorgan unter stetiger Zugspannung steht, selbst wenn die Fördereinrichtung nichts fördert und sogar wenn diese still steht. Durch eine stetige Zugspannung kann das Förderorgan mit der Zeit gestreckt werden. Dies kann wiederum ein (wiederholtes) Nachspannen des Förderorgans bedingen. Eine solche Zugspannung kann das Förderorgan belasten und verschleissen.

Es ist deshalb Aufgabe der Erfindung, eine Fördereinrichtung der eingangs genannten Art zu schaffen, welche mindestens einen Teil der oben genannten Nachteile mindestens teilweise behebt.

Diese Aufgabe löst eine Fördereinrichtung mit den Merkmalen des Patentanspruches 1.

Die erfindungsgemässe Fördereinrichtung umfasst
- ein umlaufend geführtes, flächig ausgedehntes Förderorgan, welches einen Förderabschnitt mit einer Förderfläche und einen Rückführabschnitt ausbildet,
- einen vorderen Kopfendbereich, in welchem das Förderorgan vom Förderabschnitt in Bewegungsrichtung des Förderorgans in den Rückführabschnitt umgelenkt wird, und
- eine Bremsvorrichtung, welche zum Ausüben einer Bremswirkung auf das angetriebene Förderorgan ausgestaltet ist.

Dabei umfasst die Bremsvorrichtung eine Bremsfläche, welche in Kontaktschluss mit dem Förderorgan stehen kann. Die im Wesentlichen gebogene Bremsfläche übt durch Gleitreibung mit dem Förderorgan mindestens teilweise die Bremswirkung auf das angetriebene Förderorgan aus. Zudem ist die Bremsvorrichtung derart ausgebildet und angeordnet, dass sie die Bremswirkung auf das Förderorgan an einer Stelle ausserhalb des vorderen Kopfendbereichs sowie ausserhalb des Förderabschnitts auf das Förderorgan ausübt. Die Bremsfläche ist im Wesentlichen gebogen ausgebildet sowie von einem Teil des Förderorgans umschlungen. Die Bremsvorrichtung umfasst eine Vorbremse, welche in Bewegungsrichtung des Förderorgans stromaufwärts der Bremsfläche angeordnet ist und welche eine Bremswirkung auf das Förderorgan ausübt. Die Vorbremse umfasst einen Vorbremskörper, welcher derart ausgebildet und angeordnet ist, dass er auf eine flächig ausgebildete Seite des Förderorgans Druck ausübt, das Förderorgan gegen einen Vorbremsgegenkörper drückt und dadurch das Förderorgan durch Gleitreibung bremst.

Insbesondere bildet die Bremsfläche einen Kontaktschluss mit dem Förderorgan aus.

Das Förderorgan kann als Modulband ausgebildet sein.

Ein Modulband ist ein Förderorgan, welches aus einer Mehrzahl von separaten Modulelementen zusammengesetzt ist. Die separaten Modulelemente sind dabei beweglich untereinander verbunden, insbesondere durch drehbare Verbindungen wie beispielsweise scharnierartige Mechanismen. Beispielsweise kann ein Modulband als verkettetes Band ausgebildet sein, welches durch Achsen verbundene Modulelemente umfasst. Eine Mattenkette ist eine Ausführungsform eines Modulbands.

Der Förderabschnitt ist ein Abschnitt des Förderorgans, in welchem von der Fördereinrichtung geförderte Objekte/Subjekte beim Fördern mit dem Förderorgan in Berührung treten können. Die Objekte/Subjekte werden von der Fördereinrichtung in Förderrichtung durch den Förderabschnitt befördert.

Das Förderorgan durchläuft in Bewegungsrichtung des Förderorgans flussabwärts des Förderabschnitts den vorderen Kopfendbereich. Im vorderen Kopfendbereich wird das Förderorgan vom Förderabschnitt in den Rückführabschnitt umgelenkt.

Das Förderorgan durchläuft in Bewegungsrichtung des Förderorgans den Rückführabschnitt und erreicht danach wieder den Förderabschnitt. Dabei ist insbesondere der Rückführabschnitt unterhalb des Förderabschnitts angeordnet. Mit unten oder unterhalb wird eine räumliche Position in Gravitationsrichtung stromabwärts bezeichnet. In Bewegungsrichtung des Förderorgans stromabwärts des Rückführabschnitts durchläuft das Förderorgan einen hinteren Kopfendbereich, in welchem das Förderorgan vom Rückführabschnitt in den Förderabschnitt umgelenkt wird.

Die Kopfendbereiche lenken das Förderorgan um und trennen den Förderabschnitt von dem Rückführabschnitt. Das Förderorgan weist somit vier voneinander verschiedene Abschnitte auf: den Förderabschnitt, den Rückführabschnitt sowie zwei Kopfendbereiche.

Die Bremsvorrichtung umfasst eine im Wesentlichen gebogene Bremsfläche. Die im Wesentlichen gebogene Bremsfläche steht mindestens zeitweise in Kontaktschluss mit dem Förderorgan. Das heisst, dass zeitweise ein Teil der Bremsfläche frei von Kontaktschluss mit dem Förderorgan sein kann. Dies ist beispielsweise der Fall bei Aussparungen im Förderorgan oder an Stellen welche aus geometrischen Gründen nicht bei allen Biegungsradien aufliegen können. Das Förderorgan gleitet beim Fördern über die im Wesentlichen gebogene Bremsfläche und wird durch die Gleitreibung mit einem Gleitwiderstand beaufschlagt. Dieser durch Gleitreibung verursachte Gleitwiderstand verursacht zumindest teilweise die Bremswirkung auf das angetriebene Förderorgan.

Die Bremswirkung wird durch die Bremsvorrichtung ausserhalb des Förderabschnitts und ausserhalb des vorderen Kopfendabschnitts auf das Förderorgan ausgeübt. Die Bremswirkung kann im Rückführabschnitt und/oder im hinteren Kopfendbereich auf das Förderorgan ausgeübt werden. Insbesondere wird die Bremswirkung ausschliesslich im hinteren Kopfendbereich auf das Förderorgan ausgeübt. Die Bremswirkung kann auch ausschliesslich im Rückführabschnitt auf das Förderorgan ausgeübt werden. Die Bremswirkung kann aber auch sowohl im hinteren Kopfendbereich als auch im Rückführabschnitt auf das Förderorgan ausgeübt werden.

Die Bremsfläche ist flächig ausgebildet.

Die Bremsfläche ist im Wesentlichen gebogen ausgebildet, und das Förderorgan umschlingt die Bremsfläche. Im Wesentlichen gebogen bedeutet, dass die Bremsfläche als Ganzes betrachtet gebogen ausgebildet ist. Eine im Wesentlichen gebogen ausgebildete Bremsfläche umfasst mindestens eine Biegung. Die mindestens eine Biegung kann einen kleinen oder grossen Biegungsradius aufweisen. Die mindestens eine Biegung kann also als abgerundete Kante oder als leichte Wölbung ausgebildet sein. Sowohl eine Bremsfläche mit einer einzigen knickartigen Biegung als auch eine Bremsfläche mit einer durchgehenden kreisbogenförmigen Biegung mit grossem Biegungsradius sind im Wesentlichen gebogen ausgebildete Bremsflächen.

Die im Wesentlichen gebogene Bremsfläche ist im Wesentlichen nach aussen gewölbt bzw. nach aussen gebogen in Sinne einer konvexen Biegung, wodurch sie von dem Förderorgan umschlungen werden kann.

Im Rahmen dieser Anmeldung ist mit einer Biegung der Bremsfläche eine Biegung entlang der Bewegungsrichtung des Förderorgans gemeint, sofern nicht explizit eine andere Richtungsangabe angegeben ist. Somit ist die oben beschriebene Biegung der Bremsfläche entlang der Bewegungsrichtung des Förderorgans zu verstehen (und nicht etwa quer dazu).

Eine Formgebung der Bremsfläche mit einer Biegung quer zur Bewegungsrichtung des Förderorgans ist möglich. Wo nichts anderes beschrieben ist, sind Bremsflächen gemeint, welche quer zur Bewegungsrichtung gerade ausgebildet sind. Dies heisst, dass die in Bewegungsrichtung des Förderorgans verlaufende Biegung der Bremsfläche über eine ganze Breite der Bremsfläche (also quer zur Bewegungsrichtung des Förderorgans) gleich ausgebildet ist, sofern nichts anderes beschrieben ist.

Eine im Wesentlichen gebogene Bremsfläche kann einfach und kostengünstig hergestellt werden. Auch Montage, Wartung und Ersatz einer solchen Bremsfläche ist einfach, rasch und kostengünstig durchführbar.

Indem das Förderorgan die Bremsfläche umschlingt, ist ein guter und sicherer Kontakt zwischen Förderorgan und Bremsfläche gewährleistet. Je nach Biegung der Bremsfläche kann - bei sonst gleich bleibenden Bedingungen - eine bestimmte Stärke der Gleitreibung gezielt erreicht werden. Bei einer rund gebogenen Bremsfläche (etwa einem Zylinderausschnitt) kann die Bremskraft der Bremsfläche beispielsweise mit der Seilreibungsformel (Euler-Eytelwein-Formel) bestimmt werden. Die Bremskraft der Bremsfläche ist dabei abhängig vom Umschlingungswinkel, mit welchem das Förderorgan die Bremsfläche umschlingt.

Die Bremskraft nimmt mit steigendem Umschlingungswinkel zu. Bei der Seilreibungsformel ist der Umschlingungswinkel ein Faktor des Exponenten einer natürlichen Exponentialfunktion.

Die Bremskraft der Bremsfläche kann somit durch eine gezielte Wahl der Biegung der Bremsfläche und/oder des Umschlingungswinkels in einer gewünschten Grösse festgelegt werden.

Die Bremsvorrichtung weist durch die im Wesentlichen gebogene Bremsfläche eine einfache Konstruktion auf und weist somit nicht Nachteile einer aufwendigen Konstruktion auf. Insbesondere kann die Bremsvorrichtung dadurch kostengünstig hergestellt werden. Montage, Wartung und Ersatz der Bremsvorrichtung können rasch und kostengünstig durchgeführt werden. Die Bremsvorrichtung weist eine geringe Anzahl von Einzelteilen auf, was in einer niedrigen Ausfallwahrscheinlichkeit resultiert.

Die Bremsvorrichtung kann aufgrund der einfachen Konstruktion kompakt ausgebildet werden.

Die Biegung der Bremsfläche erlaubt beispielsweise eine Anordnung der Bremsfläche im hinteren Kopfendbereich, wodurch die gesamte Fördereinrichtung kompakt ausgebildet werden kann.

Die Bremsvorrichtung kann dank der im Wesentlichen gebogenen Bremsfläche ihre Bremswirkung selbst dann bewirken, wenn das ganze Förderorgan oder aber auch nur Teile davon frei von einer Vorspannung sind. Die Fördereinrichtung weist somit als Vorteil auf, dass das Förderorgan mindestens in einem Teilabschnitt frei von einer stetigen Zugspannung verwendet und/oder derart in die Fördereinrichtung eingebaut werden kann. Die oben genannten Nachteile der Variante mit einem gespannten Förderorgan bzw. stetiger Zugspannung können somit bei Bedarf vermieden und/oder verringert werden.

Die im Wesentlichen gebogene Bremsfläche kann den Anforderungen entsprechend an bestimmten Positionen am Förderorgan angeordnet werden, was in spezifischen und vorbestimmten Spannungen in bestimmten Abschnitten des Förderorgans resultiert. Die Bremsvorrichtung kann also durch entsprechende Ausgestaltung und Anordnung in der Fördereinrichtung verschiedene Abschnitte des Förderorgans unter unterschiedliche Zugspannungen setzen. Diese Auswahlmöglichkeit ist von Vorteil und erlaubt spezifische Lösungen für eine Vielzahl von verschiedenen Anforderungen.

Die spezifischen und vorbestimmten Spannungen in bestimmten Abschnitten des Förderorgans können dabei je nach Betriebszustand der Fördereinrichtung (z.B. Fördern oder Stillstand) unterschiedlich stark sein. In einer Ausführungsform der Fördereinrichtung kann die Bremsvorrichtung die von ihr auf mindestens einen Abschnitt des Förderorgans ausgeübte Zugspannung ausschliesslich bei einer Bewegung des Förderorgans ausüben. In einer anderen Ausführungsform der Fördereinrichtung kann die Bremsvorrichtung die von ihr auf mindestens einen Abschnitt des Förderorgans ausgeübte Zugspannung sowohl bei einer Bewegung des Förderorgans als auch bei einem Stillstand des Förderorgans ausüben. Auch diese Auswahlmöglichkeit ist von Vorteil und erlaubt wiederum spezifische Lösungen für verschiedene Anforderungen.

Weitere bevorzugte Ausführungsformen gehen aus den abhängigen Patentansprüchen hervor.

Als optionales Merkmal ist die gebogene Bremsfläche gleichmässig gebogen ausgebildet. Insbesondere ist die gebogene Bremsfläche als Kreisbogen ausgebildet.

Gleichmässig gebogene Bremsflächen können einfach und rasch hergestellt werden. Eine gleichmässige Biegung kann einen kleinen Verschleiss und eine geringe Abnutzung des Förderorgans und/oder der Bremsfläche bewirken.

Mit gleichmässig gebogen ist gemeint, dass die Bremsfläche entlang der Bewegungsrichtung des Förderorgans einen bogenförmigen Verlauf aufweist, wobei die Krümmung frei von abrupten Wechseln ist.

Die Krümmung kann dabei an verschiedenen Stellen der Bremsfläche unterschiedlich gross sein. Dabei ist die Bremsfläche ausschliesslich nach aussen gekrümmt (also konvex ausgeformt). Das heisst, die Bremsfläche weist keine nach innen gekrümmten (also konkav geformte) Teile auf.

Insbesondere ist die Krümmung an allen Stellen der Bremsfläche gleich gross, wodurch die gebogene Bremsfläche entlang der Bewegungsrichtung des Förderorgans als Kreisbogen ausgebildet ist.

Die gebogene Bremsfläche kann auch unregelmässig gebogen sein.

Die gebogene Bremsfläche kann beispielsweise aber auch eine stetig zunehmende oder eine stetig abnehmende Krümmung aufweisen.

Die gebogene Bremsfläche kann eine Biegung entsprechend eines Teils eines Ovals und insbesondere eines Teils einer Ellipse aufweisen.

Insbesondere kann die gebogene Bremsfläche eine Krümmung entsprechend eines Teils eines Kegelschnitts aufweisen, also beispielsweise einer Hyperbel oder einer Parabel.

Die Bremsfläche kann auch mehrere Biegungen aufweisen, so dass die Bremsfläche polygonartig gebogen ist. Die Biegung der Bremsfläche kann die Form eines Teils eines Polygons aufweisen. Dabei sind die Ecken des Polygons als knickartige Biegungen ausgebildet, also als Biegungen mit kleinem Biegungsradius.

Optional umfasst die Bremsvorrichtung mindestens eine Reinigungsöffnung.

Insbesondere umfasst die Bremsfläche mindestens eine Reinigungsöffnung.

Diese Reinigungsöffnung kann als Schlitz ausgestaltet sein. Mit Schlitz ist eine Öffnung gemeint, welche länglich ausgebildet ist. Ein Schlitz ist also länger als breit.

Die Reinigungsöffnung kann alternativ zum Schlitz auch in runder Form oder in unregelmässiger Form ausgebildet sein.

Insbesondere ist die Reinigungsöffnung in einem Bereich der Bremsvorrichtung ausgebildet, in welchem die Bremsvorrichtung direkt unterhalb einer Unterseite des Förderorgans angeordnet ist.

Analog dazu kann die Reinigungsöffnung in einem Bereich der Bremsfläche ausgebildet sein, in welchem die Bremsfläche direkt unterhalb einer Unterseite des Förderorgans angeordnet ist.

Insbesondere ist die Reinigungsöffnung als eine durch einen Teil der Bremsvorrichtung hindurch gehende Reinigungsöffnung ausgebildet, wobei der Teil der Bremsvorrichtung mit der durchgehenden Reinigungsöffnung direkt unterhalb einer Unterseite des Förderorgans angeordnet ist.

Analog dazu kann die Reinigungsöffnung als eine durch einen Teil der Bremsfläche hindurch gehende Reinigungsöffnung ausgebildet sein, wobei der Teil der Bremsfläche mit der durchgehenden Reinigungsöffnung direkt unterhalb einer Unterseite des Förderorgans angeordnet ist.

Die Reinigungsöffnung kann in einem Bereich der Bremsvorrichtung bzw. der Bremsfläche angeordnet sein, in welcher die Umlenkung des Förderorgans bereits zu mindestens 50% angeschlossen ist. Insbesondere kann die Umlenkung bereits zu mindestens 70% abgeschlossen sein. Insbesondere kann die Umlenkung bereits zu mindestens 85% abgeschlossen sein.

Durch den die Reinigungsöffnung, welche direkt unterhalb einer Unterseite des Förderorgans angeordnet ist, können Staub, Abrieb und anderes Material vom Förderorgan weg und durch die Bremsvorrichtung bzw. die Bremsfläche hindurch bewegt werden. Beispielsweise kann sich auf dem Förderorgan vor dem Umlenken Staub ansammeln, welcher nach oder während dem Umlenken durch die Reinigungsöffnung hindurchfällt. Die Reinigungsöffnung kann dadurch der Reinigung des Förderorgans dienen.

Insbesondere fallen Staub, Abrieb und anderes Material gravitationsgetrieben durch die Reinigungsöffnung. Alternativ und/oder zusätzlich kann Druck oder Unterdruck die Bewegung durch die Reinigungsöffnung verursachen oder verstärken.

Beispielsweise sind mehrere Reinigungsöffnungen auf der Bremsvorrichtung und/oder der Bremsfläche ausgebildet.

Der Schlitz auf der Bremsvorrichtung und/oder Bremsfläche kann eine Längsachse aufweisen, welche in einem Winkel von 45 Grad relativ zur Förderrichtung des Förderorgans ausgerichtet ist.

Insbesondere kann der Winkel relativ zur Förderrichtung des Förderorgans auch 90 Grad betragen, der Schlitz also quer zur Förderrichtung des Förderorgans ausgerichtet sein. Auch ein Winkel von und mit 45 Grad bis 90 Grad ist möglich. Insbesondere ist auch ein Winkel von und mit 5 Grad bis 45 Grad möglich.

Der Schlitz ist insbesondere 2 bis 20 mm breit. Der Schlitz kann 3 bis 10 mm breit sein. Insbesondere ist der Schlitz 4-7 mm breit. Der Schlitz kann 4-5mm breit sein.

Die Bremsvorrichtung und/oder Bremsfläche kann in einem Bereich unterhalb einer Reinigungsöffnung eine Auffangvorrichtung für Staub, Abrieb und anderes Material ausbilden und/oder halten.

Als optionales Merkmal umfasst die Fördereinrichtung eine Kontrollvorrichtung, welche zum kontrollierten Bewegen der im Wesentlichen gebogenen Bremsfläche ausgestaltet ist.

Die Kontrollvorrichtung erlaubt ein kontrolliertes Bewegen der Bremsfläche relativ zur Fördereinrichtung. Die Bewegung der Bremsfläche überlagert sich dabei mit einer Bewegung des Förderorgans. Die Bewegungen der Bremsfläche und des Förderorgans addieren sich somit. Die Bewegung der Bremsfläche kann in Bewegungsrichtung des Förderorgans oder entgegen der Bewegungsrichtung des Förderorgans erfolgen. Auf diese Weise kann bei entsprechender Bewegung der Bremsfläche deren relative Bewegung zum Förderorgan kontrolliert ausgewählt werden. Durch die kontrolliert wählbare relative Bewegung kann die durch Gleitreibung ausgeübte Bremswirkung der Bremsfläche auf das Förderorgan kontrolliert gewählt werden.

Die Kontrollvorrichtung kann beispielsweise als angetriebene und axial drehbar gelagerte Walze ausgebildet sein, deren Aussenoberfläche die Bremsfläche umfasst.

Die Fördereinrichtung kann auch frei von einer Kontrollvorrichtung ausgebildet sein, so dass sich die Bremsfläche frei von einer Kontrolle bewegen lässt.

Als weiteres optionales Merkmal ist die gebogene Bremsfläche räumlich fixiert.

Die Bremsvorrichtung kann eine räumlich fixierte Bremsfläche umfassen. Dies bedeutet, dass die Bremsfläche eine feste räumliche Position beibehalten kann. Die Bremsfläche ist in diesem Fall ortsfest und bewegt sich nicht. Die räumlich fixierte Bremsfläche steht in Kontaktschluss mit dem Förderorgan. Das Förderorgan gleitet beim Fördern über die räumlich fixierte Bremsfläche und wird durch die Gleitreibung mit einem Gleitwiderstand beaufschlagt. Dieser durch Gleitreibung verursachte Gleitwiderstand verursacht zumindest teilweise die Bremswirkung auf das angetriebene Förderorgan.

Räumlich fixierte Bremsflächen sind einfach und kostengünstig herstellbar. Zudem sind diese robust. Auch Wartung und Ersatz sind einfach, kosten- und zeitsparend durchführbar.

In einer Ausführungsform der Bremsvorrichtung ist die gebogene Bremsfläche als Teil einer Oberfläche eines radialen Ausschnitts eines Zylinders oder als Teil einer Oberfläche eines Zylinders ausgebildet.

Der Zylinder kann einen kreisrunden Querschnitt aufweisen. Der Zylinder kann beispielsweise aber auch einen ovalen Querschnitt aufweisen.

Insbesondere kann der Zylinder als Hohlzylinder (also als Rohr) ausgebildet sein.

Die Ausführungsformen der Bremsvorrichtung, in welchen die gebogene Bremsfläche als Teil einer Oberfläche eines Zylinder, eines Hohlzylinders oder eines radialen Ausschnitts des Zylinders oder des Hohlzylinders ausgebildet sind, sind einfach und kostengünstig herzustellen. Dabei kann insbesondere davon profitiert werden, dass Zylinder in verschiedenen Grössen, Formen, Beschaffenheiten, Oberflächenbeschichtungen, mit verschiedenen Querschnitten und aus verschiedenen Materialien für verschiedene andere Zwecke bereits in grossen Stückzahlen hergestellt werden und kostengünstig verfügbar sind. Auch ein Montieren und/oder Ersetzen ist einfach und kann beispielsweise einfach durch Translation in Richtung der Zylinderachse erfolgen.

Die gebogene Bremsfläche kann auch als geformtes Flachmaterial ausgebildet sein. Insbesondere kann die gebogene Bremsfläche als gebogenes Flachmaterial ausgebildet sein.

Ein Flachmaterial wie beispielsweise ein Blech oder eine Platte kann zur gebogenen Bremsfläche geformt werden. Somit kann ein Ausgangsmaterial in flächiger Form nach einer entsprechenden formenden Bearbeitung die gebogene Bremsfläche ausbilden.

Eine Ausführungsform der Bremsvorrichtung mit einer als geformtes Flachmaterial ausgebildeten Bremsfläche kann abhängig von Materialeigenschaften des Flachmaterials und Anforderungen an die gebogene Bremsfläche rasch, einfach und/oder kostengünstig hergestellt werden.

Insbesondere kann die Auffangvorrichtung als geformtes Flachmaterial ausgebildet sein. Beispielsweise ist die Auffangvorrichtung aus demselben Stück Flachmaterial ausgebildet wie die gebogene Bremsfläche.

Alternativ kann die Bremsvorrichtung eine gebogene Bremsfläche umfassen, welche frei von formender und/oder materialabtragender Nachbearbeitung bereits in seiner finalen gebogenen Form hergestellt wird.

Beispielsweise kann die gebogene Bremsfläche mit einer Gussform, Pressform, Schablone oder unter Verwendung einer Fixiervorrichtung hergestellt werden. Die gebogene Bremsfläche kann etwa durch Sintern von Keramik und/oder Metall, Aushärten von Kunststoffen und/oder Verbundstoffen (insbesondere von faserverstärkten Verbundstoffen), Metallguss und/oder additive Fertigungsverfahren (z.B. schichtweiser Aufbau durch sukzessives Befestigen von einzelnen Materiallagen aufeinander oder 3D-Druck bzw. 3D-Modulierungsverfahren) ausgebildet werden.

Insbesondere kann auch die Auffangvorrichtung frei von formender und/oder materialabtragender Nachbearbeitung bereits in seiner finalen gebogenen Form hergestellt werden.

Die gebogene Bremsfläche kann auch in verschiedenen Bereichen mit verschiedenen oben beschriebenen Methoden hergestellt werden. Beispielsweise kann ein Bereich derselben gebogenen Bremsfläche aus einem radialen Ausschnitt eines Hohlzylinders ausgebildet sein, ein weiterer Bereich aus geformtem Flachmaterial und ein weiterer Bereich aus gegossenem Metall.

Analog dazu gilt auch für die Auffangvorrichtung, dass verschiedene Bereiche mit verschiedenen oben beschriebenen Methoden hergestellt werden können.

Auch können die gebogene Bremsfläche und die Auffangvorrichtung gleichartig hergestellt bzw. ausgebildet sein. Oder die gebogene Bremsfläche und die Auffangvorrichtung sind verschiedenartig hergestellt bzw. ausgebildet.

Insbesondere kann die Auffangvorrichtung gleichzeitig mit der gebogenen Bremsfläche auf dieselbe Weise hergestellt werden. Beispielsweise können die Auffangvorrichtung und die gebogene Bremsfläche einstückig ausgebildet sein.

Als weiteres optionales Merkmal umfasst der Umschlingungswinkel der Bremsfläche mindestens 90 Grad. Insbesondere umfasst der Umschlingungswinkel der Bremsfläche mindestens 180 Grad und insbesondere mindestens 200 Grad.

Durch einen Umschlingungswinkel von mindestens 90 Grad kann eine starke Bremswirkung erzielt werden. Dies trifft entsprechend auf für Umschlingungswinkel von mindestens 180 Grad oder mindestens 200 Grad zu. Zudem kann diese starke Bremswirkung auf kleinem Raum erzielt werden. Die Bremsvorrichtung kann also kompakt ausgebildet werden.

Optional ist die Bremsfläche in einem hinteren Kopfendbereich angeordnet, in welchem das Förderorgan vom Rückführabschnitt in den Förderabschnitt umgelenkt wird.

Durch eine Anordnung der Bremsfläche im hinteren Kopfendbereich kann einerseits die Bremswirkung der Bremsfläche genutzt und andererseits gleichzeitig eine Richtungsänderung des Förderorgans durch die Bremsvorrichtung erfolgen. Dies erlaubt eine kompakte Ausbildung der Fördereinrichtung mit wenigen Bauteilen.

Alternativ kann die Bremsfläche im Rückführabschnitt angeordnet sein. Dies kann beispielsweise von Vorteil sein, wenn im hinteren Kopfendbereich wenig Platz zur Verfügung steht.

Als ein weiteres optionales Merkmal ist die Bremsfläche als Umlenkung des Förderorgans in den Förderabschnitt ausgebildet ist.

Auf diese Weise kann die Bremsfläche gleichzeitig als Bremse und als Umlenkung des Förderorgans vom Rückführabschnitt in den Förderabschnitt dienen. Auf diese Weise benötigt die Fördereinrichtung weniger Einzelteile, kann einfacher konstruiert und kostengünstiger hergestellt werden.

Die Bremsfläche kann das Förderorgan aber auch umlenken, ohne es direkt in den Förderabschnitt umzulenken. Beispielsweise kann die Bremsfläche nur einen Teil der Umlenkung des Förderorgans in den Förderabschnitt vornehmen (also ohne einen letzten Teil der Umlenkung direkt in den Förderabschnitt, welche durch andere Mittel als die Bremsfläche erfolgt). Dies kann beispielsweise von Vorteil sein, falls durch die Gleitreibung entstehender Abrieb räumlich an vom Förderabschnitt entfernt anfallen soll. Beispielsweise kann auf diese Weise auch eine Geräuschentwicklung durch die Bremsfläche gezielt minimiert und/oder gedämpft werden.

Die Bremsfläche kann aber auch an der Umlenkung des Förderorgans in den Förderabschnitt unbeteiligt sein. Hierfür gelten dieselben Vorteile wie bereits im obigen Absatz beschrieben.

In einer Ausführungsvariante umfasst die Fördereinrichtung eine Antriebsvorrichtung, welche derart ausgebildet ist, dass sie das Förderorgan durch Formschluss und/oder Reibschluss an einer Stelle antreibt, welche in Bewegungsrichtung des Förderorgans stromabwärts des Förderabschnitts sowie stromaufwärts der Bremsvorrichtung angeordnet ist.

Die Antriebsvorrichtung kann dabei insbesondere im vorderen Kopfendbereich angeordnet sein. Beispielsweise kann die Antriebsvorrichtung sogar die Umlenkung des Förderorgans vom Förderabschnitt in den Rückführabschnitt vornehmen. Derart ausgebildete Fördereinrichtungen weisen eine kompakte Bauweise auf.

Die Antriebsvorrichtung wirkt der Bremsvorrichtung entgegen. Auf diese Weise kann das Förderorgan zwischen der Antriebsvorrichtung und der Bremsvorrichtung mit einer Zugspannung beaufschlagt werden. Die Förderfläche im Förderabschnitt kann dadurch kontrolliert und bedarfsgerecht unter Zugspannung gesetzt werden.

Es ist aber auch möglich, dass die Fördereinrichtung frei von einem eigenen Antrieb ausgebildet ist. Beispielsweise kann die Fördereinrichtung passiv durch bereits vorhandene kinetische Energie der zu fördernden Objekte/Subjekte betrieben werden und/oder mittels Gravitationskraft.

Die Bremsvorrichtung umfasst eine Vorbremse, welche in Bewegungsrichtung des Förderorgans stromaufwärts der Bremsfläche angeordnet ist und welche eine Bremswirkung auf das Förderorgan ausübt.

Eine Vorbremse kann zusätzlich zur im Wesentlichen gebogenen Bremsfläche eine Bremskraft auf das Förderorgan ausüben. Zudem können sich die Vorbremse und die Bremsfläche in ihrer Bremskraft ergänzen und insbesondere verstärken. Beispielsweise kann die Vorbremse derart angeordnet werden, dass der Umschlingungswinkel der Bremsfläche einer bestimmten Grösse entspricht (wodurch die Bremsfläche ähnlich einer Bandbremse die Bremswirkung der Vorbremse verstärkt). Die Vorbremse kann für relativ kleine Bremskräfte ausgelegt sein und in Kombination mit der im Wesentlichen gebogenen Bremsfläche eine starke Bremskraft auf das Förderorgan bewirkten. Eine derartige Bremsvorrichtung weist eine starke Bremskraft auf, ist einfach und stabil konstruiert und kann kostengünstig hergestellt und betrieben werden.

Die Vorbremse umfasst einen Vorbremskörper, welcher derart ausgebildet und angeordnet ist, dass er auf eine flächig ausgebildete Seite des Förderorgans Druck ausübt, das Förderorgan gegen einen Vorbremsgegenkörper drückt und dadurch das Förderorgan durch Gleitreibung bremst.

Die auf das Förderorgan wirkende Gleitreibung in der Vorbremse kann beispielsweise durch Gleitreibung des Förderorgans mit dem Vorbremskörper entstehen. Die auf das Förderorgan wirkende Gleitreibung in der Vorbremse kann aber auch beispielsweise durch Gleitreibung des Förderorgans mit dem Vorbremsgegenkörper entstehen. Die auf das Förderorgan wirkende Gleitreibung in der Vorbremse kann auch durch Gleitreibung des Förderorgans mit dem Vorbremskörper sowie mit dem Vorbremsgegenkörper entstehen.

Eine derartige Vorbremse ist für relativ kleine Bremskräfte einfach und günstig herstellbar.

Als optionales Merkmal kann die Vorbremse eine Einstellvorrichtung zum Verändern des durch den Vorbremskörper auf die flächig ausgebildete Seite des Förderorgans ausgeübten Drucks aufweisen.

Eine Einstellvorrichtung zum variieren des auf das Förderorgan ausgeübten Druck erlaubt eine gute Kontrolle der Fördereinrichtung. Beispielsweise kann die Zugspannung auf das Förderorgan im Förderabschnitt geregelt werden. Insbesondere kann die Einstellvorrichtung selbstregulierend ausgebildet sein, so dass die Zugspannung im Förderabschnitt konstant gehalten wird.

Die Fördereinrichtung kann aber auch mit einer Vorbremse ohne Einstellvorrichtung ausgebildet werden.

Optional greift die Vorbremse an zwei Bereichen des Förderorgans am Förderorgan an, wobei diese Bereiche quer zur Bewegungsrichtung des Förderorgans voneinander beabstandeten sind. Insbesondere greift die Vorbremse an zwei Bereichen des Förderorgans am Förderorgan an, welche an gegenüberliegenden Rändern des Förderorgans angeordnet sind.

Diese voneinander beabstandeten Angriffspunkte der Vorbremse am Förderorgan erlauben eine gezielte räumliche Variation der Bremskraft. Auf diese Weise kann das Förderorgan beispielsweise gezielt geführt werden.

Die Vorbremse kann aber auch nur an einem zusammenhängenden Bereich des Förderorgans am Förderorgan angreifen. Die Vorbremse kann beispielsweise aber auch in mehr als zwei Bereichen des Förderorgans am Förderorgan angreifen.

In einer Ausführungsform weist die Bremsvorrichtung mehrere in Bewegungsrichtung des Förderorgans hintereinander angeordnete im Wesentlichen gebogene Bremsflächen auf.

Die Vorteile einer einzelnen im Wesentlichen gebogenen Bremsfläche sind bereits weiter oben beschrieben. Durch eine Kombination von mehreren hintereinander angeordneten Bremsflächen kann die Bremswirkung nichtlinear verstärkt werden. Auch eine kompakte Bauweise kann erzielt werden. Zudem ist eine derartige Konstruktion stabil und kostengünstig.

Die Fördereinrichtung kann auch lediglich eine einzige im Wesentlichen gebogene Bremsfläche aufweisen.

Optional sind die mehreren im Wesentlichen gebogenen Bremsflächen in Bewegungsrichtung des Förderorgans aufeinander folgend auf jeweils gegenüberliegenden flächig ausgebildeten Seiten des Förderorgans angeordnet.

Diese Anordnung führt das Förderorgan mäanderartig bzw. schlangenlinienförmig zwischen den im Wesentlichen gebogenen Bremsflächen hindurch. Auf diese Weise können die im Wesentlichen gebogenen Bremsflächen platzsparend und sich in der Bremswirkung gegenseitig verstärkend angeordnet werden. Durch spezifische gegenseitige räumliche Anordnungen sind viele Variationen möglich.

Alternativ können mindestens zwei aufeinanderfolgende Bremsflächen auf jeweils derselben Seite des Förderorgans angeordnet sein. Auf diese Weise lässt sich das Förderorgan beispielsweise mehrfach in die gleiche Richtung Umlenken und gleichzeitig Abbremsen.

Als weiteres optionales Merkmal umfasst die Fördereinrichtung eine flächige Abstützung eines Teils des Förderorgans im Förderabschnitt in Gravitationsrichtung, wobei die flächige Abstützung insbesondere Gleitschienen aufweist.

Zur Abstützung des Förderorgans im Bereich des Förderabschnitts zwischen den Umlenkstellen, in welchem das Fördergut dem Förderorgan aufliegt, kann das Förderorgan z. B. auf Gleitschienen gleitend geführt sein. Es sind auch Fördereinrichtungen bekannt, bei welchen das Förderorgan zwischen den Umlenkstellen rollend abgestützt wird.

Die Fördereinrichtung kann auch durch eine Abstützung abgestützt sein, welche die Fördereinrichtung punktuell anstatt flächig abstützt. Die Fördereinrichtung kann auch frei von einer Abstützung ausgebildet sein.

Insbesondere ist die oben beschriebene Fördereinrichtung als Werker-Mitfahrband ausgebildet.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Seitenansicht eines Teils einer ersten Ausführungsform der Fördereinrichtung;
- Figur 2: eine perspektivische Ansicht eines Teils der ersten Ausführungsform der Fördereinrichtung;
- Figur 3: eine perspektivische Ansicht eines Teils einer zweiten Ausführungsform der Fördereinrichtung;
- Figur 4: eine Seitenansicht eines Teils einer dritten Ausführungsform der Fördereinrichtung;
- Figur 5: eine perspektivische Ansicht eines Teils einer vierten Ausführungsform der Fördereinrichtung;
- Figur 6: einen vergrösserten Ausschnitt aus Figur 5;
- Figur 7: eine Sicht von oben auf eine Anwendung der Fördereinrichtung als Werker-Mitfahrband;
- Figur 8: eine Seitenansicht eines Teils einer fünften Ausführungsform der Fördereinrichtung;
- Figur 9: eine Seitenansicht eines Teils einer sechsten Ausführungsform der Fördereinrichtung;
- Figur 10: eine Seitenansicht eines Teils einer siebten Ausführungsform der Fördereinrichtung;
- Figur 11: eine perspektivische Ansicht eines Teils der siebten Ausführungsform der Fördereinrichtung.

Grundsätzlich sind in den Figuren gleiche Teile mit gleichen Bezugszeichen versehen. Die Gravitationsrichtung G zeigt in allen Figuren an, welche Elemente oben und welche unten liegen.

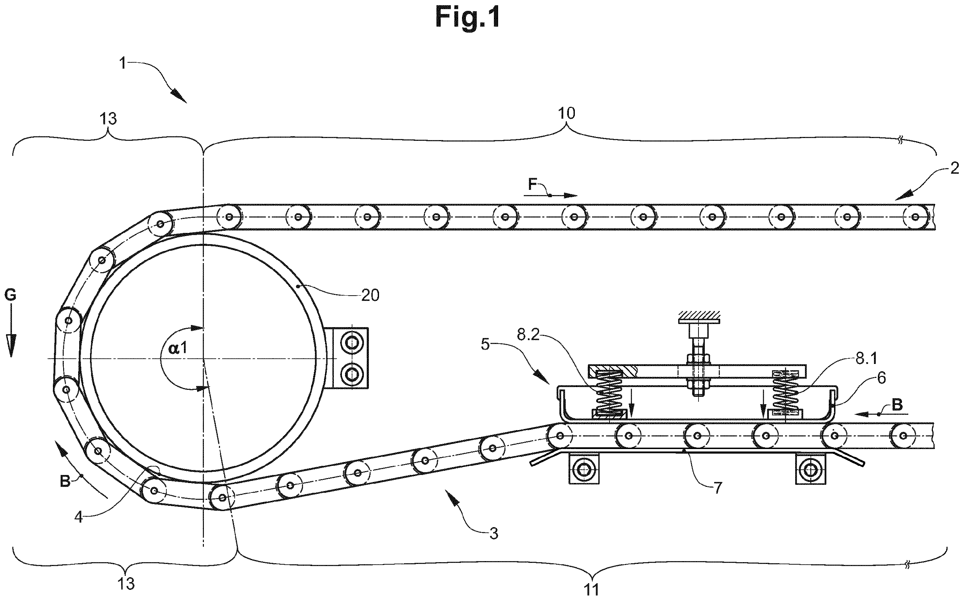

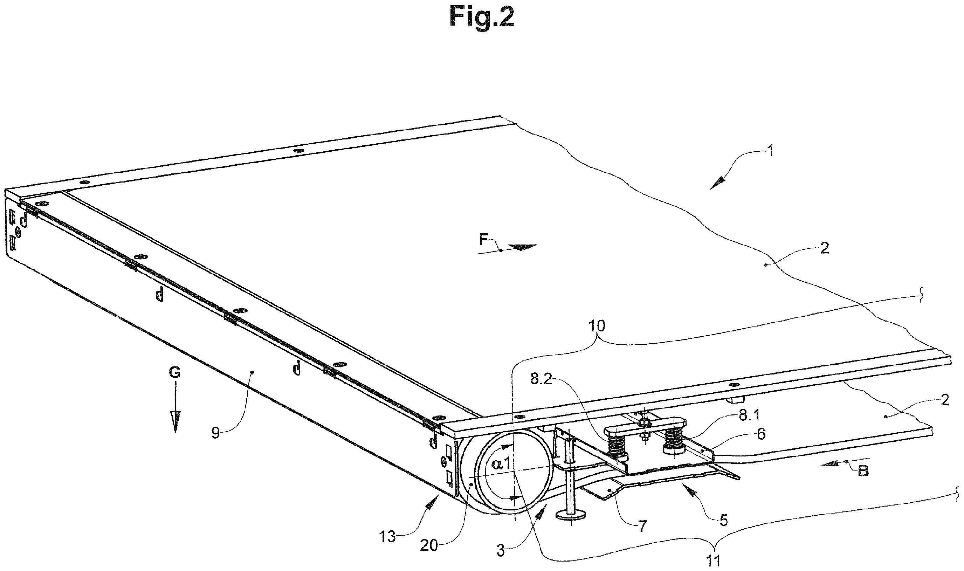

Die Figuren 1 und 2 zeigen eine erste Ausführungsform einer Fördereinrichtung 1. Zum besseren Verständnis der Funktionsweise der Fördereinrichtung 1 sind in Figur 1 lediglich einige Teile der Fördereinrichtung 1 dargestellt. Figur 1 zeigt in Seitenansicht einen Teil eines Förderorgans 2 sowie eine Bremsvorrichtung 3, welche eine Bremsfläche 4 und eine Vorbremse 5 umfasst. Die Vorbremse 5 wiederum weist einen Vorbremskörper 6 und einen Vorbremsgegenkörper 7 auf.

Die Bremsfläche 4 ist als Teil einer Aussenoberfläche eines Hohlzylinders 20 ausgebildet. Der Hohlzylinder 20 weist einen kreisrunden und ringförmigen Querschnitt auf. Die Bremsfläche 4 ist somit gleichmässig gebogen. Der Hohlzylinder 20 ist ortsfest, drehfest und translationsfest an der Fördereinrichtung 1 befestigt und somit fixiert. Das Förderorgan 2 ist als Mattenkette ausgebildet und umschlingt den Hohlzylinder 20 mit einem Umschlingungswinkel α1. Innerhalb dieses Umschlingungswinkels α1 kann das Förderorgan 2 mit der als Teil der Aussenoberfläche des Hohlzylinders 20 ausgebildeten Bremsfläche 4 in Kontakt treten.

Ein unten liegender Teil des Förderorgans 2 bewegt sich in Bewegungsrichtung B des Förderorgans 2 zuerst durch die Vorbremse 5 und bewegt sich dann auf die Bremsfläche 4 zu. Bis zum Beginn der Bremsfläche 4 und somit bis zum Beginn des Umschlingungswinkels α1 befindet sich der unten liegende Teil des Förderorgans 2 in einem Rückführabschnitt 11. In Figur 1 beträgt der Umschlingungswinkel α1 190 Grad.

Die Bremsfläche 4 übt in Figur 1 nicht nur durch Gleitreibung eine Bremswirkung auf das Förderorgan 2 aus, sondern dient gleichzeitig auch als Umlenkung des Förderorgans 2 aus dem Rückführabschnitt 11 in einen Förderabschnitt 10. Das Förderorgan 2 befindet sich im Bereich der Bremsfläche 4 (mit anderen Worten längs des Umschlingungswinkels α1) also in einem hinteren Kopfendbereich 13.

Bei Betrieb der Fördereinrichtung 1 bewegt sich das Förderorgan 2 in Figur 1 also in Bewegungsrichtung B des Förderorgans 2 zuerst durch den Rückführabschnitt 11, anschliessend durch den hinteren Kopfendbereich 13 und daran anschliessend durch den Förderabschnitt 10. Im Förderabschnitt 10 entspricht die Bewegungsrichtung B des Förderorgans 2 der Förderrichtung F.

Die Vorbremse 5 übt in der ersten Ausführungsform der Fördereinrichtung 1 die Bremskraft auf das Förderorgan 2 durch Gleitreibung aus. Dazu drückt der Vorbremskörper 6 von oben auf eine obere flächige Seite des Förderorgans 2, wodurch das Förderorgan 2 mit seiner unteren flächigen Seite von oben gegen den Vorbremsgegenkörper 7 gedrückt wird. Sowohl der Vorbremskörper 6 als auch der Vorbremsgegenkörper 7 sind in Bewegungsrichtung B des Förderorgans 2 unbeweglich an der Fördereinrichtung 1 befestigt, wodurch das Förderorgan 2 unter Entstehung von Gleitreibung daran vorbei bewegt werden kann.

Der Vorbremskörper 6 ist mittels zusammengedrückter Schraubenfedern 8.1, 8.2 nach unten gegen das Förderorgan 2 vorgespannt, so dass der Vorbremskörper 6 mit einem gleichbleibenden Druck von oben gegen das Förderorgan 2 drückt. Die Schraubenfedern 8.1, 8.2 können durch eine mittels Schraubgewinde verstellbaren Konstruktion mehr oder weniger zusammengedrückt werden, wodurch der Druck des Vorbremskörpers 6 auf das Förderorgan 2 und somit die Bremswirkung der Vorbremse 5 (und dadurch auch der ganzen Bremsvorrichtung 3) manuell eingestellt werden kann.

Nachdem das Förderorgan 2 die Vorbremse 5 passiert hat, gleitet es über die Bremsfläche 4 und wird dadurch zusätzlich gebremst. Die Bremswirkung der Vorbremse 5 auf das Förderorgan 2 wird durch die Gleitreibung der Bremsfläche 4 verstärkt. In Bewegungsrichtung B des Förderorgans 2 stromaufwärts der Vorbremse 5 weist das Förderorgan 2 keine Zugspannung oder Vorspannung auf. Durch die Vorbremse 5 und die Bremsfläche 4 wird das Förderorgan 2 mit einer Bremskraft beaufschlagt, welche beim Fördern von Objekten/Subjekten im Förderabschnitt 10 das Förderorgan 2 im Förderabschnitt 10 unter Zugspannung setzt. Ist die Fördereinrichtung 1 nicht in Betrieb, bleibt die Zugspannung am Förderorgan 2 im Förderabschnitt 10 nicht erhalten. Bei Nichtbetrieb ist das Förderorgan 2 im Förderabschnitt 10 also frei von Zugspannung. Sowohl in Betrieb als auch bei Nichtbetrieb der Fördereinrichtung 1 ist mindestens ein Teil des Förderorgans 2 nicht unter Zugspannung.

In Figur 2 ist eine perspektivische Ansicht der ersten Ausführungsform der Fördereinrichtung 1 dargestellt. Wie in Figur 1 wird dabei aus Gründen der einfacheren Darstellung nur ein Teil der Fördereinrichtung 1 gezeigt. Das Förderorgan 2 ist in Figur 2 vereinfacht als Band (ohne detaillierte Darstellung der einzelnen Glieder der Mattenkette) dargestellt. Figur 2 zeigt neben den in Figur 1 dargestellten Teilen zusätzlich eine winkelförmige Abdeckung 9 des hinteren Kopfendbereichs 13. Die Abdeckung 9 deckt das Förderorgan 2 im hinteren Kopfendbereich 13 gegen oben und an dessen Stirnseite teilweise ab.

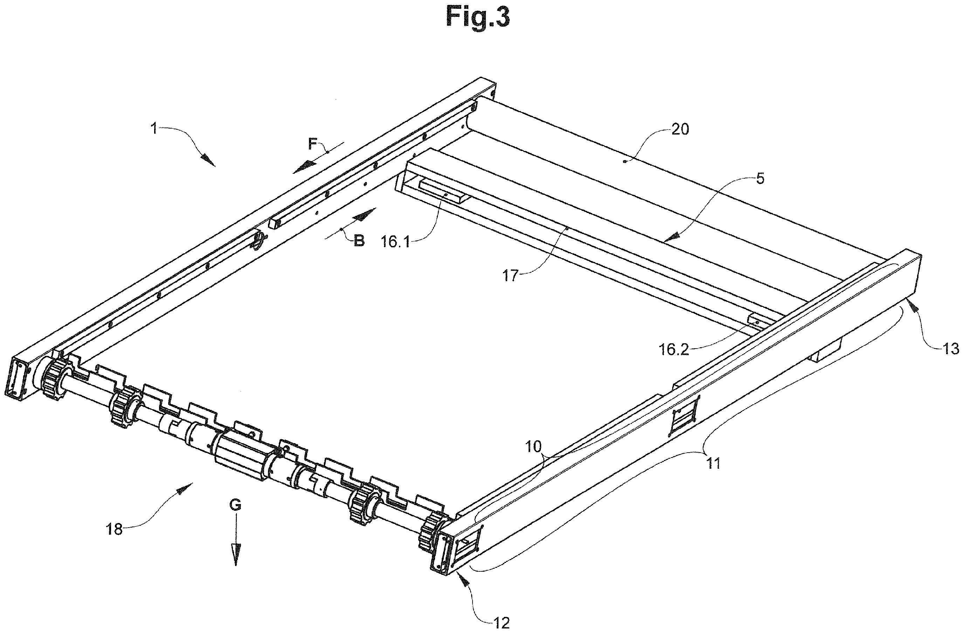

Figur 3 zeigt eine perspektivische Ansicht eines Teils einer zweiten Ausführungsform der Fördereinrichtung. Wieder sind aus Gründen der einfacheren Darstellung lediglich bestimmte Teile der Fördereinrichtung 1 gezeigt. In Figur 3 ist das Förderorgan 2 nicht dargestellt, aber dessen Bewegungsrichtung B sowie die Förderrichtung F. In Figur 3 ist dafür im Gegensatz zu Figuren 1 und 2 ein vorderer Kopfendbereich 12 dargestellt, welcher für die erste und die zweite Ausführungsform gleich ausgebildet ist. Der vordere Kopfendbereich 12 umfasst eine Antriebsvorrichtung 18, welche als durch einen Elektromotor angetriebene Welle mit in das Förderorgan 2 eingreifenden Zahnrädern ausgebildet ist. Die Antriebsvorrichtung 18 dient dabei gleichzeitig der Umlenkung des Förderorgans 2 vom Rückführabschnitt 11 in den Förderabschnitt 10.

Der einzige Unterschied zwischen der in Figuren 1 und 2 dargestellten ersten Ausführungsform und der in Figur 3 dargestellten zweiten Ausführungsform besteht in der Ausgestaltung der Vorbremse 5. Die Vorbremse 5 weist zwar wiederum einen Vorbremsgegenkörper 17 auf, aber in diesem Fall zwei Vorbremskörper 16.1, 16.2 auf. Zudem sind die Vorbremskörper 16.1, 16.2 unterhalb des Förderorgans 2 und der Vorbremsgegenkörper 17 oberhalb des Förderorgans 2 angeordnet. Somit wird das Förderorgan 2 von der Vorbremse 5 nicht nach unten, sondern nach oben (gegen den als Anschlag dienenden Vorbremsgegenkörper 17) gedrückt. Auch in der zweiten Ausführungsform sind sowohl die Vorbremskörper 16.1, 16.2 als auch der Vorbremsgegenkörper 7 in Bewegungsrichtung B des Förderorgans 2 unbeweglich an der Fördereinrichtung 1 befestigt, wodurch das Förderorgan 2 unter Entstehung von Gleitreibung daran vorbei bewegt werden kann.

Die beiden Vorbremskörper 16.1, 16.2 sind jeweils an einander quer zur Bewegungsrichtung des Förderorgans entgegen gesetzten Rändern des Förderorgans 2 angeordnet. Dabei sind die Vorbremskörper 16.1, 16.2 in Bewegungsrichtung B des Förderorgans 2 auf gleicher Höhe am Förderorgan angeordnet. Somit greift die Vorbremse 5 an zwei quer zur Bewegungsrichtung B des Förderorgans 2 voneinander beabstandeten Bereichen des Förderorgans am Förderorgan an. Genauer gesagt greift die Vorbremse 5 an zwei gegenüberliegenden Rändern des Förderorgans 2 am Förderorgan 2 an.

In Figur 3 wurde darauf verzichtet, eine Einstellvorrichtung zum Verändern des durch die Vorbremskörper 16.1, 16.2 auf die flächig ausgebildete Seite des Förderorgans 2 ausgeübten Drucks darzustellen, obwohl die zweite Ausführungsform der Fördereinrichtung 1 eine solche umfasst.

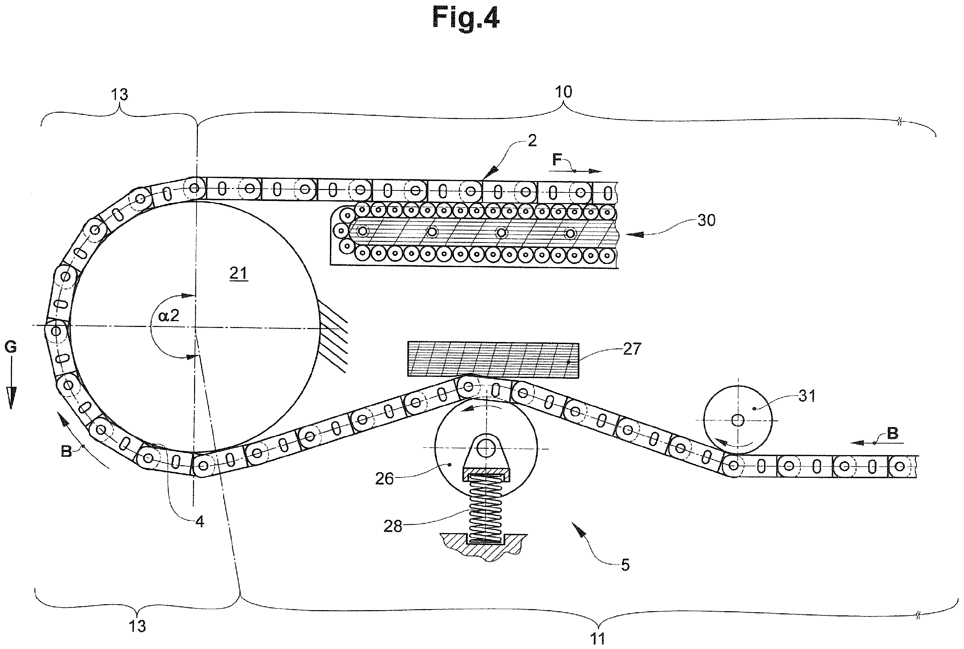

Figur 4 zeigt eine Seitenansicht eines Teils einer dritten Ausführungsform der Fördereinrichtung. Die dritte Ausführungsform weist wiederum ein Förderorgan 2 auf, welches als Mattenkette ausgebildet ist. Im Vergleich zu der ersten und zweiten Ausführungsform sind allerdings die Glieder der Mattenkette etwas kürzer. Wo bei der ersten und zweiten Ausführungsform noch etwa sieben Glieder der Mattenkette die Bremsfläche 4 gleichzeitig umschlingen konnten, können bei der dritten Ausführungsform etwa neun Glieder der Mattenkette die Bremsfläche 4 gleichzeitig umschlingen. In der dritten Ausführungsform ist der Umschlingungswinkel a2 aber mit 200 Grad auch leicht grösser ausgefallen.

Die Bremsfläche 4 ist als Teil einer Aussenoberfläche eines Zylinders 21 ausgebildet. Der Zylinder 21 ist ein im Gegensatz zu der ersten und zweiten Ausführungsform aber voll und nicht als Hohlzylinder ausgebildet. Der Zylinder 21 ist aber auch drehfest, rotationsfest und translationsfest an der Fördereinrichtung 1 befestigt.

Ein weiterer Unterschied der dritten Ausführungsform zur ersten und zweiten Ausführungsform liegt in der Vorbremse 5, bei welcher der Vorbremskörper 26 als drehbar gelagerte Rolle ausgebildet ist. Wie in der zweiten Ausführungsform ist der Vorbremskörper 26 unterhalb des Förderorgans 2 angeordnet. Das Förderorgan 2 wird durch den Vorbremskörper 26 also durch Druck von unten auf eine flächig ausgebildete untere Seite nach oben gegen eine untere Seite des Vorbremsgegenkörpers 27 gedrückt. Das Förderorgan 2 wird in der Vorbremse 5 somit nur auf seiner oberen flächig ausgebildeten Seite durch den Vorbremsgegenkörper 27 mit einer durch Gleitreibung entstehende Bremswirkung beaufschlagt. Der Vorbremskörper 26 dreht sich mit dem Förderorgan 2 bei einer Bewegung mit.

Der Vorbremskörper 26 in Figur 4 ist analog zum Vorbremskörper 6 der ersten Ausführungsform durch eine zusammengedrückte Schraubenfeder 28 vorgespannt. Zudem ist in der dritten Ausführungsform in Bewegungsrichtung B des Förderorgans 2 stromaufwärts der Vorbremse 5 eine drehbar und ortsfest gelagerte Führungsrolle 31 angeordnet. Diese Führungsrolle 31 drückt das Förderorgan von oben nach unten unter eine festgelegte maximale Höhe in Gravitationsrichtung. Auf diese Weise ist das Förderorgan 2 im Rückführabschnitt 11 der Fördereinrichtung 1 geführt und wird der Vorbremse 5 in einem festgelegten Winkel zugeführt, was die Bremswirkung der Vorbremse 5 konstant zu halten vermag. Die Führungsrolle 31 kann Vibrationen und Schwankungen des Förderorgans 2 im Rückführabschnitt 11 mindern oder eliminieren.

In der dritten Ausführungsform umfasst die Fördereinrichtung 1 zudem eine Abstützung 30 des Förderabschnitts 10. Die Abstützung 30 ist dabei flächig ausgebildet und umfasst eine um einen zentralen Stützkörper umlaufende Rollenmatte, auf welche sich das Förderorgan 2 in einem Teil des Förderabschnitts 10 von oben abstützt.

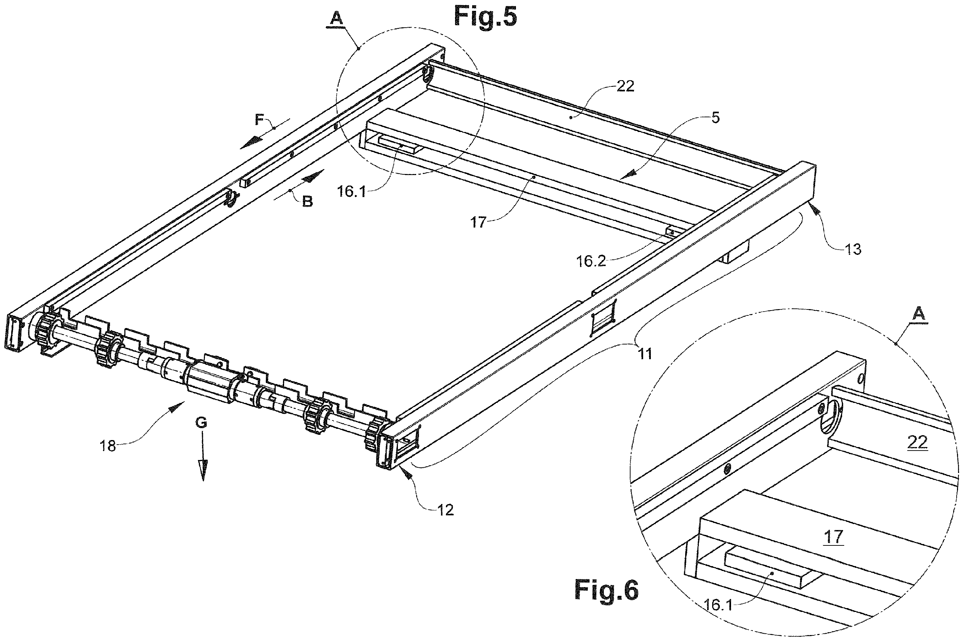

Figur 5 zeigt eine perspektivische Ansicht eines Teils einer vierten Ausführungsform der Fördereinrichtung. Der Unterschied zwischen der vierten Ausführungsform in Figur 5 und der zweiten Ausführungsform in Figur 3 besteht darin, dass die Bremsfläche 4 nicht als Teil der Aussenoberfläche eines ganzen Hohlzylinders 20, sondern als Teil einer Aussenoberfläche eines halben Hohlzylinders 22. Dabei ist der halbe Hohlzylinder 22 in Längsrichtung halbiert und kann mit anderen Worten als eine Halbröhre bezeichnet werden. Der Begriff "halb" ist in diesem Zusammenhang weiter zu verstehen als eine Hälfte im mathematischen bzw. geometrischen Sinn. Hier ist beispielsweise ein Winkel von mehr als 180 Grad auch als "halb" zu verstehen. Ein Bereich zwischen einem Viertel und drei Viertel kann im Weitesten Sinn unter "halb" verstanden werden, also von 90 Grad bis 270 Grad.

In Figur 5 entspricht der halbe Hohlzylinder 22 einem radialen Ausschnitt eines kreisrunden Hohlzylinders mit Umfang des Umschlingungswinkels α1 (also hier 190 Grad). Der halbe Hohlzylinder 22 ist derart im hinteren Kopfendbereich 13 angeordnet, dass ein Teil seiner Aussenoberfläche gleichzeitig als Bremsfläche 4 und als Umlenkung für das Förderorgan 2 vom Rückführabschnitt 11 in den Förderabschnitt 10 dient.

Figur 6 zeigt einen vergrösserten Ausschnitt aus Figur 5. Darin ist der halbe Hohlzylinder 22, an dessen Aussenoberfläche die Bremsfläche 4 ausgebildet ist, klarer zu erkennen.

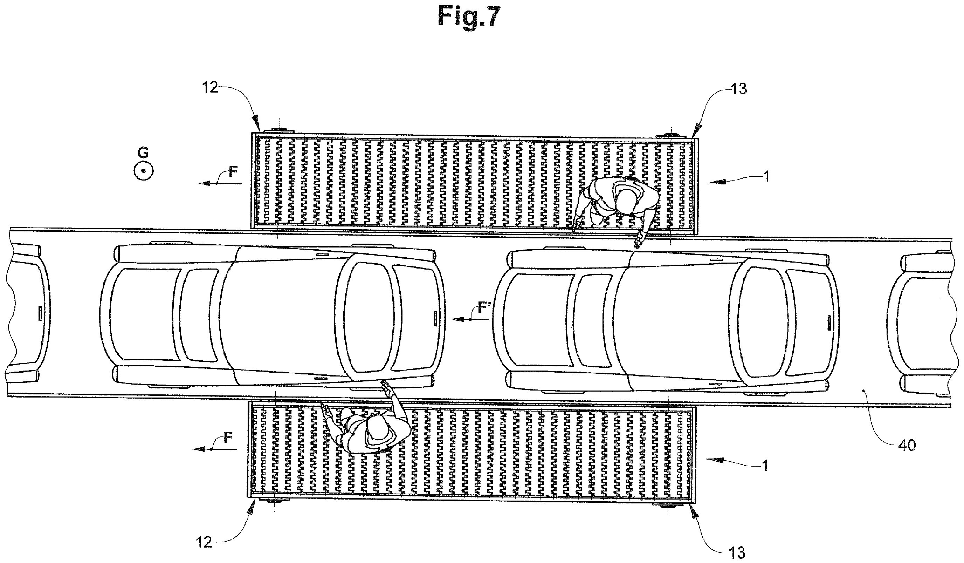

In Figur 7 ist eine Sicht von oben auf eine Anwendung der Fördereinrichtung 1 als Werker-Mitfahrband dargestellt. Dabei sind je eine Fördereinrichtung 1 auf einer Seite eines Werkbandes 40 angeordnet. Beispielsweise werden auf dem Werkband 40 Automobile gefördert und gleichzeitig durch als Werker bezeichnete Arbeiter bearbeitet. Die Werker können auf den Fördereinrichtungen 1 beidseitig des Werkbands 40 stehen und werden darauf stehend mit gleicher Geschwindigkeit und in gleicher Richtung mit dem Werkband 40 mitbewegt, also in relativem räumlichem Stillstand zum Werkband 40. Dazu weisen die Förderrichtungen F der Fördereinrichtungen 1 und die Förderrichtung F' des Werkbands 40 in dieselbe Richtung, und die Bewegungsgeschwindigkeiten des Förderorgane 2 der Fördereinrichtungen 1 sind der Bewegungsgeschwindigkeit des Werkbands 40 angepasst.

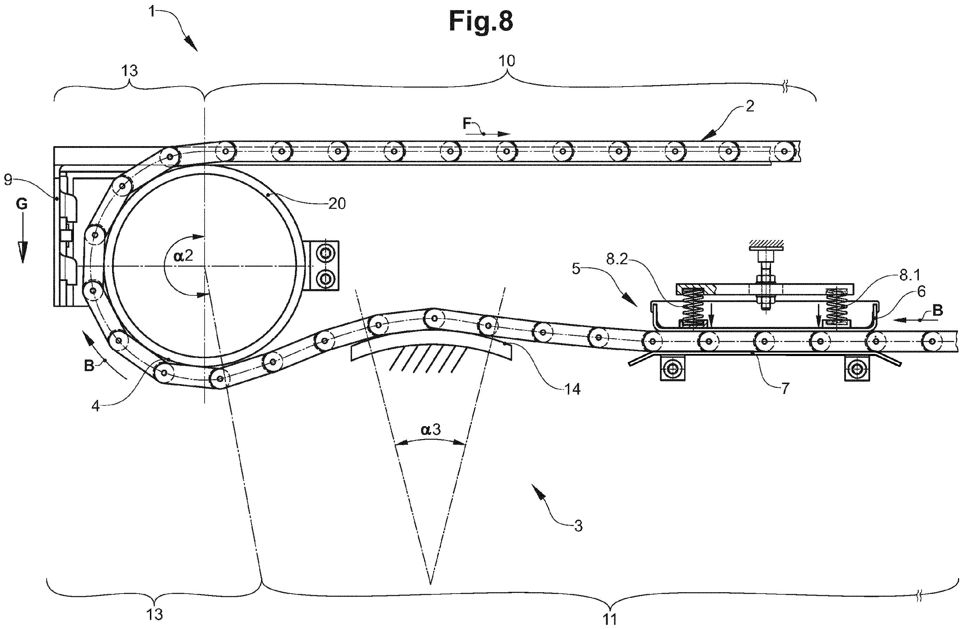

In Figur 8 ist eine Seitenansicht eines Teils einer fünften Ausführungsform der Fördereinrichtung dargestellt. Die fünfte Ausführungsform unterscheidet sich von der ersten Ausführungsform dadurch, dass zwischen der Vorbremse 5 und dem Hohlzylinder 20, auf dessen Aussenoberfläche die im Wesentlichen gebogene Bremsfläche 4 ausgebildet ist, eine zusätzliche und im Wesentlichen gebogene Bremsfläche 14 angeordnet ist. Somit weist die fünfte Ausführungsform zwei im Wesentlichen gebogene Bremsflächen 4, 14 auf sowie die Vorbremse 5.

Die fünfte Ausführungsform ist ein Beispiel einer Fördereinrichtung 1 mit mehreren im Wesentlichen gebogenen Bremsflächen 4, 14. Das Förderorgan 2 verläuft in Bewegungsrichtung B des Förderorgans 2 von der Vorbremse 5 direkt über die im Wesentlichen gebogene zusätzliche Bremsfläche 14 zur im Wesentlichen gebogenen Bremsfläche 4. Letztere dient auch als Umlenkung des Förderorgans 2 in den Förderabschnitt 10.

Die Biegung der im Wesentlichen gebogenen zusätzlichen Bremsfläche 14 weist als Form einen Kreisbogen auf (und weist somit eine gleichmässige Biegung auf). Die im Wesentlichen gebogene zusätzliche Bremsfläche 14 ist von einer Aussenfläche eines radialen Ausschnitts eines Hohlzylinders umfasst. Dieser radiale Ausschnitt eines Hohlzylinders ist ortsfest, drehfest und translationsfest an der Fördereinrichtung 1 befestigt und somit fixiert.

Die im Wesentlichen gebogene zusätzliche Bremsfläche 14 ist dabei derart räumlich relativ zur im Wesentlich gebogenen Bremsfläche 4 angeordnet, dass der Umschlingungswinkel a2 der im Wesentlichen gebogenen Bremsfläche 4 wie in der dritten Ausführungsform 200 Grad beträgt und der Umschlingungswinkel a3 der im Wesentlichen gebogenen zusätzlichen Bremsfläche 14 etwa 35 Grad beträgt.

Die von der Aussenseite des Hohlzylinders 20 umfasste und im Wesentlichen gebogene Bremsfläche 4 ist innerhalb des geschlossenen Förderorgans 2 angeordnet und übt seine mindestens teilweise auf Gleitreibung basierende Bremswirkung auf eine flächig ausgebildete Innenseite des Förderorgans 2 aus. Die im Wesentlichen gebogene zusätzliche Bremsfläche 14 übt seine mindestens teilweise auf Gleitreibung basierende Bremswirkung auf eine flächig ausgebildete Aussenseite des Förderorgans 2 aus. Die im Wesentlichen gebogene Bremsfläche 4 und die im Wesentlichen gebogene zusätzliche Bremsfläche 14 sind in Bewegungsrichtung des Förderorgans 2 hintereinander angeordnet sowie auf jeweils gegenüberliegenden flächig ausgebildeten Seiten des Förderorgans 2 angeordnet. Das Förderorgan 2 bewegt sich somit schlangenlinienförmig zwischen den beiden im Wesentlichen gebogenen Bremsflächen 4, 14 hindurch.

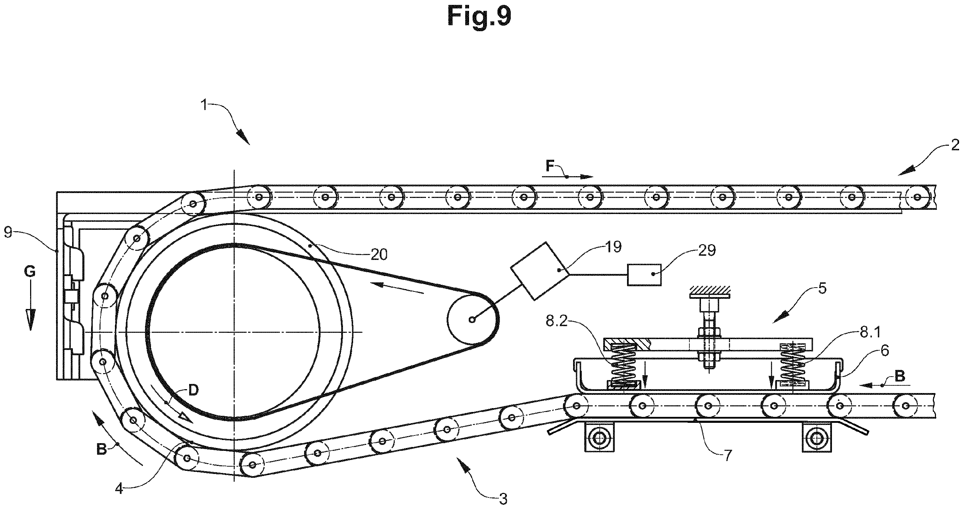

Figur 9 zeigt eine Seitenansicht eines Teils einer sechsten Ausführungsform der Fördereinrichtung 1. Die sechste Ausführungsform unterscheidet sich von der ersten Ausführungsform dadurch, dass die im Wesentlichen gebogene Bremsfläche 4 kontrolliert bewegt werden kann. Dazu umfasst die sechste Ausführungsvorrichtung der Fördereinrichtung 1 eine Kontrollvorrichtung 29, und der Hohlzylinder 20, von dessen Aussenoberfläche die im Wesentlichen gebogene Bremsfläche 4 umfasst wird, ist drehbar um seine Längsachse gelagert. Die Kontrollvorrichtung 29 steuert einen Motor 19, welcher den Hohlzylinder 20 antreibt und diesen um seine Längsachse drehen lässt. Die im Wesentlichen gebogene Bremsfläche 4 bewegt sich auf diese Weise kontrolliert in eine Bewegungsrichtung D der im Wesentlichen gebogenen Bremsfläche 4.

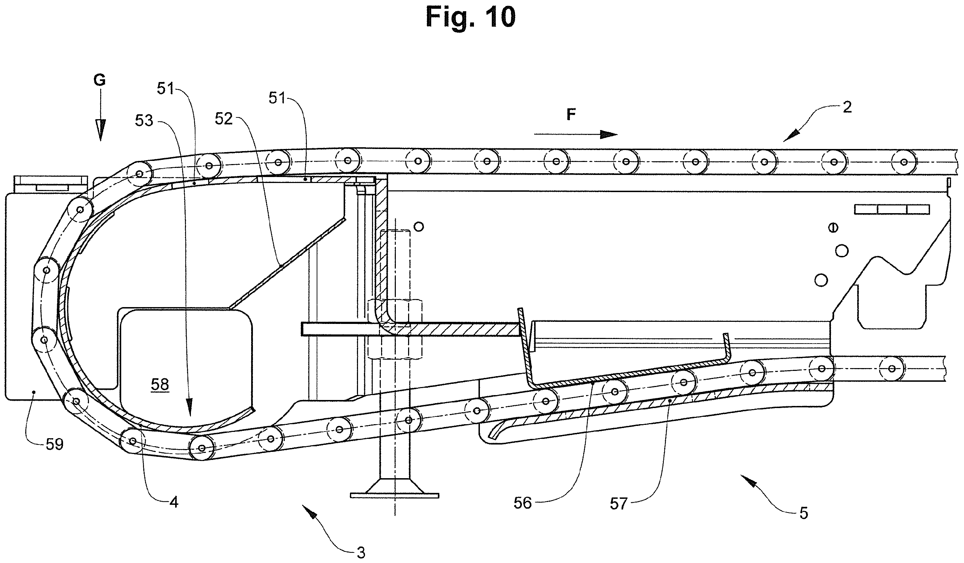

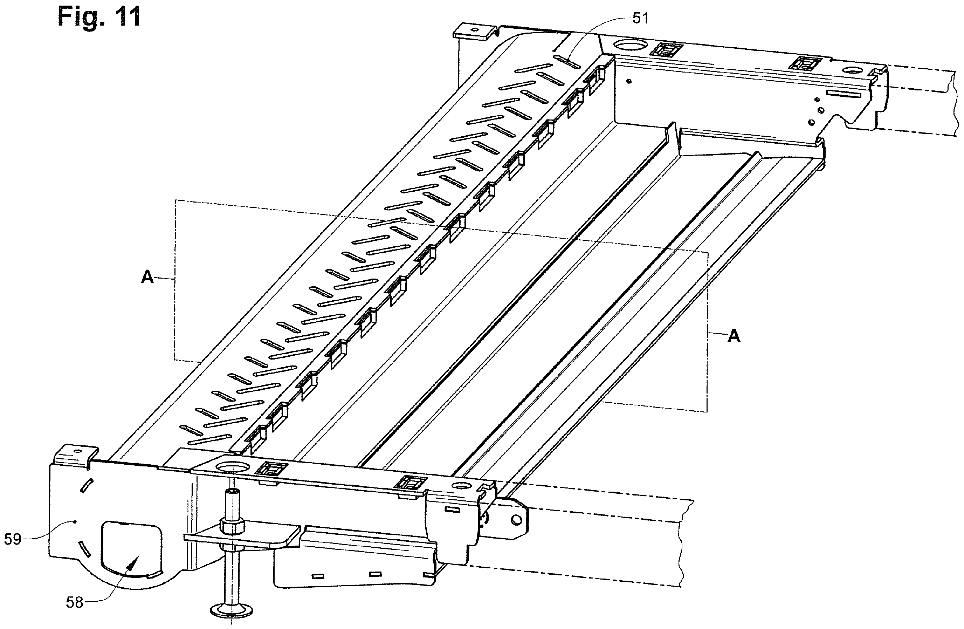

In Figur 10 ist eine Seitenansicht eines Teils einer siebten Ausführungsform der Fördereinrichtung dargestellt. Dieselbe siebte Ausführungsform ist in Figur 11 in einer perspektivischen Ansicht dargestellt, wobei aus Gründen der einfacheren Darstellung das Förderorgan 2 nicht eingezeichnet ist. Dabei entspricht die Seitenansicht in Figur 10 einem in Figur 11 eingezeichneten Schnitt entlang der Ebene A-A.

Die siebte Ausführungsform der Fördereinrichtung 1 umfasst, wie gut in Figur 10 ersichtlich ist, neben der Vorbremse 5 mit dem Vorbremskörper 56 und dem Vorbremsgegenkörper 57 die Bremsvorrichtung 3. Die Biegung der gebogenen Bremsfläche 4 der Bremsvorrichtung 3 weist in Förderrichtung F flussabwärts eine stetig abnehmende Krümmung auf. Auf diese Weise bildet die Bremsvorrichtung 3 im unteren Bereich der Bremsfläche 4 und in Bewegungsrichtung des Förderorgans 2 flussaufwärts eine Auffangvorrichtung 53 aus. Die Bremsvorrichtung 3 bildet zudem im oberen Bereich der Bremsfläche 4 und in Bewegungsrichtung des Förderorgans 2 flussabwärts einen abflachenden Endbereich aus, welcher an seinem in Bewegungsrichtung des Förderorgans 2 flussabwärts gelegenen Ende leicht nach unten vom Förderorgan 2 weg weist.

Oberhalb der Auffangvorrichtung 53 ist eine Sammelrutsche 52 derart angeordnet, dass durch Gravitation angetriebenes Material von der Sammelrutsche 52 in die Auffangvorrichtung 53 geleitet wird. Oberhalb der Sammelrutsche 52 und oberhalb der Auffangvorrichtung 53 wiederum sind Reinigungsöffnungen in Form von Schlitzen 51 in der Bremsvorrichtung 3 bzw. in der Bremsfläche 3 ausgebildet.

Die Schlitze 51 sind derart angeordnet, dass durch die Schlitze 51 Staub, Abrieb und anderes Material durch Gravitation angetrieben hindurchfallen kann. Staub, Abrieb und anderes Material fallen dabei direkt in die Auffangvorrichtung 53 oder auf die Sammelrutsche 52, welche diese in die Auffangvorrichtung 53 weiterleitet. Die Auffangvorrichtung 53 dient somit dem Sammeln von Staub, Abrieb und anderem Material, welches durch die Schlitze 51 fällt. In der Abdeckung 59 ist eine Reinigungsöffnung 58 ausgebildet, welche einen Zugriff auf die Auffangvorrichtung 53 erlaubt. Durch die Reinigungsöffnung 58 kann Staub, Abrieb und anderes Material aus der Auffangvorrichtung 53 entnommen und diese geleert werden.

In Figur 11 gut zu sehen sind die Schlitze 51. Es ist eine Mehrzahl von Schlitzen 51 ausgebildet, welche grob gesagt in zwei aufeinanderfolgenden Reihen quer zur Förderrichtung F angeordnet sind. Alle Schlitze 51 weisen jeweils eine Längsachse auf, welche in einem Winkel von 45 Grad relativ zur Förderrichtung F des Förderorgans 2 ausgerichtet sind. Dabei sind die Schlitze 51 in Figur 11 derart in beiden Reihen angeordnet, dass mindestens ein Teil eines Schlitzes 51 eine Gerade schneidet, welche in Förderrichtung F im Bereich der beiden Reihen der Schlitze 51 verläuft. Mit anderen Worten wird das Förderorgan 2 im Bereich der beiden Reihen der Schlitze 51 in Förderrichtung F mindestens über einen Teil eines der Schlitze 51 bewegt. Auf diese Weise wird sichergestellt, dass das Förderorgan 2 im Bereich der Reihe der Schlitze 51 in Förderrichtung F mindestens einmal über einen Teil eines Schlitzes 51 hinweg bewegt wird und dadurch gereinigt werden kann.

## Patentansprüche

1. Fördereinrichtung (1), umfassend
- ein umlaufend geführtes, flächig ausgedehntes Förderorgan (2), welches einen Förderabschnitt (10) mit einer Förderfläche und einen Rückführabschnitt (11) ausbildet,
- einen vorderen Kopfendbereich (12), in welchem das Förderorgan (2) vom Förderabschnitt (10) in Bewegungsrichtung (B) des Förderorgans (2) in den Rückführabschnitt (11) umgelenkt wird,
- eine Bremsvorrichtung (3), welche zum Ausüben einer Bremswirkung auf das angetriebene Förderorgan (2) ausgestaltet ist,
wobei
- die Bremsvorrichtung (3) eine Bremsfläche (4) umfasst, welche in Kontaktschluss mit dem Förderorgan (2) stehen kann und welche durch Gleitreibung mit dem Förderorgan (2) mindestens teilweise die Bremswirkung auf das angetriebene Förderorgan (2) ausübt,
- die Bremsvorrichtung (3) derart ausgebildet und angeordnet ist, dass sie die Bremswirkung auf das Förderorgan (2) an einer Stelle ausserhalb des vorderen Kopfendbereichs (12) sowie ausserhalb des Förderabschnitts (10) auf das Förderorgan (2) ausübt und dass
- die Bremsfläche (4) im Wesentlichen gebogen ausgebildet ist und von einem Teil des Förderorgans (2) umschlungen ist,
**dadurch gekennzeichnet, dass**
die Bremsvorrichtung (3) eine Vorbremse (5) umfasst, welche in Bewegungsrichtung (B) des Förderorgans (2) stromaufwärts der Bremsfläche (4) angeordnet ist und eine Bremswirkung auf das Förderorgan (2) ausübt, wobei die Vorbremse (5) einen Vorbremskörper (6, 16.1, 16.2, 26) umfasst, welcher derart ausgebildet und angeordnet ist, dass er auf eine flächig ausgebildete Seite des Förderorgans (2) Druck ausübt, das Förderorgan (2) gegen einen Vorbremsgegenkörper (7, 17, 27) drückt und dadurch das Förderorgan (2) durch Gleitreibung bremst.

2. Fördereinrichtung (1) gemäss Anspruch 1, **dadurch gekennzeichnet, dass** die Fördereinrichtung (1) eine Kontrollvorrichtung (29) umfasst, welche zum kontrollierten Bewegen der im Wesentlichen gebogenen Bremsfläche (4) ausgestaltet ist.

3. Fördereinrichtung (1) gemäss Anspruch 1, **dadurch gekennzeichnet, dass** die gebogene Bremsfläche (4) räumlich fixiert ist.

4. Fördereinrichtung (1) gemäss einem der Ansprüche 1 bis 3, **dadurch gekennzeichnet, dass** die gebogene Bremsfläche (4) eine stetig zunehmende oder eine stetig abnehmende Krümmung aufweist.

5. Fördereinrichtung (1) gemäss einem der Ansprüche 1 bis 4, **dadurch gekennzeichnet, dass** ein Umschlingungswinkel (α1, α2) der Bremsfläche (4) mindestens 90 Grad umfasst.

6. Fördereinrichtung (1) gemäss einem der Ansprüche 1 bis 5, **dadurch gekennzeichnet, dass** die Bremsfläche (4) in einem hinteren Kopfendbereich (13), in welchem das Förderorgan (2) vom Rückführabschnitt (11) in den Förderabschnitt (10) umgelenkt wird, angeordnet ist.

7. Fördereinrichtung (1) gemäss einem der Ansprüche 1 bis 6, **dadurch gekennzeichnet, dass** die Bremsfläche (4) als Umlenkung des Förderorgans (2) in den Förderabschnitt (10) ausgebildet ist.

8. Fördereinrichtung (1) gemäss einem der Ansprüche 1 bis 7, **dadurch gekennzeichnet, dass** die Bremsvorrichtung (3) eine Reinigungsöffnung (51) zur Reinigung des Förderorgans (2) umfasst, wobei die Reinigungsöffnung (51) in einem Bereich der Bremsvorrichtung (3) ausgebildet ist, in welchem die Bremsvorrichtung (3) direkt unterhalb einer Unterseite des Förderorgans (2) angeordnet ist.

9. Fördereinrichtung (1) gemäss einem der Ansprüche 1 bis 8, **dadurch gekennzeichnet, dass** sie eine Antriebsvorrichtung (18) umfasst, welche derart ausgebildet ist, dass sie das Förderorgan (2) durch Formschluss und/oder Reibschluss an einer Stelle antreibt, welche in Bewegungsrichtung (B) des Förderorgans (2) stromabwärts des Förderabschnitts sowie stromaufwärts der Bremsvorrichtung (3) angeordnet ist.

10. Fördereinrichtung (1) gemäss einem der Ansprüche 1 bis 9, **dadurch gekennzeichnet, dass** die Vorbremse (5) eine Einstellvorrichtung zum Verändern des durch den Vorbremskörper (6, 16.1, 16.2, 26, 56) auf die flächig ausgebildete Seite des Förderorgans (2) ausgeübten Drucks aufweist.

11. Fördereinrichtung (1) gemäss einem der Ansprüche 1 bis 10, **dadurch gekennzeichnet, dass** die Vorbremse (5) an zwei Bereichen des Förderorgans (2) am Förderorgan (2) angreift, wobei diese Bereiche quer zur Bewegungsrichtung (B) des Förderorgans (2) voneinander beabstandet sind, und diese Bereiche insbesondere an zwei gegenüberliegenden Rändern des Förderorgans (2) angeordnet sind.

12. Fördereinrichtung (1) gemäss einem der Ansprüche 1 bis 11, **dadurch gekennzeichnet, dass** die Bremsvorrichtung (3) mehrere in Bewegungsrichtung (B) des Förderorgans (2) hintereinander angeordnete im Wesentlichen gebogene Bremsflächen (4, 14) aufweist.

13. Fördereinrichtung (1) gemäss Anspruch 12, **dadurch gekennzeichnet, dass** in Bewegungsrichtung (B) des Förderorgans (2) aufeinander folgende Bremsflächen (4, 14) auf jeweils gegenüberliegenden flächig ausgebildeten Seiten des Förderorgans (2) angeordnet sind.

14. Fördereinrichtung (1) gemäss einem der Ansprüche 1 bis 13, **dadurch gekennzeichnet, dass** sie eine flächige Abstützung (30) eines Teils des Förderorgans (2) im Förderabschnitt (10) in Gravitationsrichtung (G) umfasst, wobei die flächige Abstützung insbesondere Gleitschienen aufweist.

## Claims

1. A conveying device (1), comprising
- a circulatorily led, extensively extended conveying element (2) which forms a conveying section (10) with a conveying surface, and a return section (11),
- a front head-end region (12), in which the conveying element (2) is deflected from the conveying section (10) in the movement direction (B) of the conveying element (2) into the return section (11),
- a braking device (3) which is designed for exerting a braking effect upon the driven conveying element (2),
wherein
- the braking device (3) comprises a braking surface (4) which can have a contact fit with the conveying element (2) and which by way of sliding friction with the conveying element (2) at least partly exerts the braking effect upon the driven conveying element (2),
- the braking device (3) is designed and arranged in a manner such that it exerts the braking effect upon the conveying element (2) at a location outside the front head-end region (12) as well as upon the conveying element (2) outside the conveying section (10) and that
- the braking surface (4) is designed in an essentially bent manner and is wrapped by a part of the conveying element (2),
**characterised in that**
the braking device (3) comprises a preliminary brake (5) which is arranged upstream of the braking surface (4) in the movement direction (B) of the conveying element (2), and exerts a braking effect upon the conveying element (2), wherein the preliminary brake (5) comprises a preliminary brake body (6, 16.1, 16.2, 26) which is designed and arranged, in a manner such that it exerts pressure upon an extensively-surfaced formed side of the conveying element (2), presses the conveying element (2) against a preliminary brake counter-body (7, 17, 27) and by way of this brakes the conveying element (2) by way of sliding friction.

2. A conveying device (1) according to claim 1, **characterised in that** the conveying device (1) comprises a control device (29) which is designed for the controlled moving of the essentially bent braking surface (4).

3. A conveying device (1) according to claim 1, **characterised in that** the bent braking surface (4) is spatially fixed.

4. A braking device (1) according to one of the claims 1 to 3, **characterised in that** the bent braking surface (4) has a constantly increasing or a constantly reducing curvature.

5. A conveying device (1) according to one of the claims 1 to 4, **characterised in that** a wrap angle (α1, α2) of the braking surface (4) is at least 90 degrees.

6. A conveying device (1) according to one of the claims 1 to 5, **characterised in that** the braking surface (4) is arranged in a rear head-end region (13), in which the conveying element (2) is deflected from the return section (11) into the conveying section (10).

7. A conveying device (1) according to one of the claims 1 to 6, **characterised in that** the braking surface (4) is designed as a deflection of the conveying element (2) into the conveying section (10).

8. A conveying device (1) according to one of the claims 1 to 7, **characterised in that** the braking device (3) comprises a cleaning opening (51) for cleaning the conveying element (2), wherein the cleaning opening (51) is formed in a region of the braking device (3), in which the braking device (3) is arranged directly below the lower side of the conveying element (2).

9. A conveying device (1) according to one of the claims 1 to 8, **characterised in that** it comprises a drive device (18) which is designed in a manner such that it drives the conveying element (2) by way of a positive fit and/or friction fit, at a location which is arranged downstream of the conveying section as well as upstream of the braking device (3), in the movement direction (B) of the conveying element (2).

10. A conveying device (1) according to one of the claims 1 to 9, **characterised in that** the preliminary brake (5) comprises a setting device for changing the pressure which is exerted by the preliminary brake body (6, 16.1, 16.2, 26, 56) upon the side of the conveying element (2) which is formed in an extensively-surfaced manner.

11. A conveying device (1) according to one of the claims 1 to 10, **characterised in that** the preliminary brake (5) engages on the conveying element (2) at two regions of the conveying element (2), wherein these regions are distanced to one another transversely to the movement direction (B) of the conveying element (2), and these regions in particular are arranged on two opposite edges of the conveying element (2).

12. A conveying device (1) according to one of the claims 1 to 11, **characterised in that** the braking device (3) comprises several essentially bent braking surfaces (4, 14) which are arranged one after the other in the movement direction (B) of the conveying element (2).

13. A conveying device (1) according to claim 12, **characterised in that** braking surfaces (4, 14) which are successive to one another in the movement direction (B) of the conveying element (2) are arranged in each case on opposite sides of the conveying element (2) which are formed in an extensively-surfaced manner.

14. A conveying device (1) according to one of the claims 1 to 13, **characterised in that** it comprises an extensively-surfaced support (30) of a part of the conveying element (2) in the conveying section (10) in the gravitation direction (G), wherein the extensively-surfaced support in particular comprises slide rails.

## Revendications

1. Dispositif de transport (1) comprenant
un organe de transport (2) s'étendant en surface et guidé en boucle fermée, qui forme une section de transport (10) dotée d'une surface de transport ainsi qu'une section de renvoi (11),
une partie d'extrémité de tête avant (12) dans laquelle l'organe de transport (2) est renvoyé de la section de transport (10) dans la section de renvoi (11) dans la direction de déplacement (B) de l'organe de transport (2),
un ensemble de freinage (3) configuré pour exercer un effet de freinage sur l'organe de transport (2) entraîné,
l'ensemble de freinage (3) comportant une surface de freinage (4) qui peut être mise en contact avec l'organe de transport (2) et qui exerce au moins une partie de l'effet de freinage sur l'organe de transport (2) entraîné par frottement de coulissement avec l'organe de transport (2),
l'ensemble de freinage (3) étant configuré et disposé de telle sorte qu'il exerce l'effet de freinage sur l'organe de transport (2) en un emplacement situé sur l'organe de transport (2) à l'extérieur de la partie d'extrémité de tête avant (12) ainsi qu'à l'extérieur de la section de transport (10) et
la surface de freinage (4) étant essentiellement courbe et entourée par une partie de l'organe de transport (2),
**caractérisé en ce que**
l'ensemble de freinage (3) comporte un pré-frein (5) disposé en amont de la surface de freinage (4) dans la direction de déplacement (B) de l'organe de transport (2) et qui exerce un effet de freinage sur l'organe de transport (2), le pré-frein (5) comportant un corps (6, 16.1, 16.2, 26) de pré-frein configuré et disposé de telle sorte qu'il exerce une poussée sur un côté plat de l'organe de transport (2), qu'il repousse l'organe de transport (2) contre un corps complémentaire (7, 17, 27) de pré-frein et qu'il freine ainsi l'organe de transport (2) par frottement.

2. Dispositif de transport (1) selon la revendication 1, **caractérisé en ce que** le dispositif de transport (1) comporte un ensemble de contrôle (29) qui est configuré pour déplacer de manière contrôlée la surface de freinage (4) essentiellement courbe.

3. Dispositif de transport (1) selon la revendication 1, **caractérisé en ce que** la surface de freinage (4) est fixe dans l'espace.

4. Dispositif de transport (1) selon l'une des revendications 1 à 3, **caractérisé en ce que** la surface de freinage (4) présente une courbure qui augmente de manière continue ou diminue de manière continue.

5. Dispositif de transport (1) selon l'une des revendications 1 à 4, **caractérisé en ce que** l'angle de boucle (α1, α2) de la surface de freinage (4) est d'au moins 90 degrés.

6. Dispositif de transport (1) selon l'une des revendications 1 à 5, **caractérisé en ce que** la surface de freinage (4) est disposée dans une partie d'extrémité de tête arrière (13) dans laquelle l'organe de transport (2) est renvoyé depuis la section de renvoi (11) jusque dans la section de transport (10).

7. Dispositif de transport (1) selon l'une des revendications 1 à 6, **caractérisé en ce que** la surface de freinage (4) est configurée comme renvoi de l'organe de transport (2) dans la section de transport (10).

8. Dispositif de transport (1) selon l'une des revendications 1 à 7, **caractérisé en ce que** l'ensemble de freinage (3) comporte une ouverture de nettoyage (51) qui permet le nettoyage de l'organe de transport (2), l'ouverture de nettoyage (51) étant formée dans une partie de l'ensemble de freinage (3) dans laquelle l'ensemble de freinage (3) est disposé directement en dessous du côté inférieur de l'organe de transport (2).

9. Dispositif de transport (1) selon l'une des revendications 1 à 8, **caractérisé en ce qu'**il comporte un ensemble d'entraînement (18) configuré de telle sorte qu'il entraîne l'organe de transport (2) par correspondance géométrique et/ou correspondance de frottement en un emplacement qui est disposé en aval de la section de transport ainsi qu'en amont de l'ensemble de freinage (3) dans la direction de déplacement (B) de l'organe de transport (2).

10. Dispositif de transport (1) selon l'une des revendications 1 à 9, **caractérisé en ce que** le pré-frein (5) présente un dispositif de réglage qui modifie la poussée exercée par le corps (6, 16.1, 16.2, 26, 56) de pré-freinage sur le côté plat de l'organe de transport (2).

11. Dispositif de transport (1) selon l'une des revendications 1 à 10, **caractérisé en ce que** le pré-frein (5) engage l'organe de transport (2) sur deux parties de l'organe de transport (2), ces parties étant situées à distance l'une de l'autre dans une direction transversale par rapport à la direction de déplacement (B) de l'organe de transport (2), ces parties étant disposées en particulier sur deux bords opposés de l'organe de transport (2).

12. Dispositif de transport (1) selon l'une des revendications 1 à 11, **caractérisé en ce que** l'ensemble de freinage (3) présente plusieurs surfaces de freinage (4, 14) essentiellement courbes disposées les unes derrière les autres dans la direction de déplacement (B) de l'organe de transport (2).

13. Dispositif de transport (1) selon la revendication 12, **caractérisé en ce que** des surfaces de freinage (4, 14) successives dans la direction de déplacement (B) de l'organe de transport (2) sont disposées sur des côtés plats opposés de l'organe de transport (2).

14. Dispositif de transport (1) selon l'une des revendications 1 à 13, **caractérisé en ce qu'**il comporte un soutien plat (30) dans la direction (G) de la gravité pour une partie de l'organe de transport (2) dans la section de transport (10), le soutien plat présentant en particulier des rails de coulissement.
